# EUROPÄISCHE PATENTSCHRIFT

(11) **EP 0 539 775 B1**
(45) Veröffentlichungstag und Bekanntmachung des Hinweises auf die Patenterteilung: **09.08.1995**
(21) Anmeldenummer: 92117167.4
(22) Anmeldetag: 08.10.1992
(51) Int. Cl.: H02J 7/10

(54) **Verfahren zum Laden einer Batterie**
Method for charging a battery
Procédé de charge de batterie

(30) Priorität: 30.10.1991 DE 4135770
(43) Veröffentlichungstag der Anmeldung: 05.05.1993
(73) Patentinhaber: ROBERT BOSCH GMBH, 70442 Stuttgart (DE)
(72) Erfinder: Andrae, Peter, Dipl.-Ing., W-7252 Weil Der Stadt (DE); Tobias, Ralph, Dipl.-Ing., W-7141 Möglinen (DE)

(56) Entgegenhaltungen:
- EP-A- 0 349 995
- GB-A- 2 155 709
- US-A- 3 678 363
- US-A- 4 670 703

## Beschreibung

### Verfahren zum Laden einer Batterie

### Stand der Technik

Die Erfindung geht aus von einem Verfahren zum Laden einer Batterie, insbesondere einer Bleibatterie für Kraftfahrzeuge, nach der Gattung des unabhängigen Anspruchs. Ein derartiges Verfahren ist beispielsweise aus der DE-PS 34 29 673 bekannt. Das dort beschriebene Verfahren zum Schnelladen einer Batterie arbeitet mit mehreren Kennlinienabschnitten sowie einer zeitlichen Begrenzung des Ladevorganges sowohl in den einzelnen Ladezyklen als auch hinsichtlich der Maximalladezeit. Dokument US-A-4 670 703 offenbart ein Ladeverfahren, in dem eine Batterie in einer ersten Ladestufe mit einem ersten Ladestrom geladen wird. Dabei werden eventuelle Fehler ermittelt. Bei Erreichen einer vorbestimmten Batteriespannung wird in einer zweiten Ladestufe die Batterie mit einem höheren Ladestom geladen. Wenn die Batteriespannung einen weiteren Wert erreicht, wird auf eine dritte Ladestufe, mit einem Ladestrom der niedriger ist als der der ersten Ladestufe, umgeschaltet.

### Vorteile der Erfindung

Das erfindungsgemäße Ladeverfahren mit den kennzeichnenden Merkmalen des unabhängigen Anspruchs hat den Vorteil, daß einerseits sowohl tiefentladene wie normalentladene Batterien geladen werden können und daß andererseits das gleiche Verfahren auch im Stützbetrieb für elektrische Verbraucher einsetzbar ist, wenn die Versorgungsbatterie abgeklemmt werden muß, beispielsweise bei Reparaturen im Bordnetz eines Kraftfahrzeuges. Im normalen Ladebetrieb verhindert ein Verpolschutz das Laden bei verkehrt angeschlossener Batterie und überwacht beim Laden durch zyklisches Austasten der Ladespannung mit anschließender Messung der Batteriespannung die Verbindung zur Batterie. Um das verwendete Schaltelement zu schonen, erfolgt die Austastung nur bei Unterschreiten eines vorgegebenen Grenzstromes.

Die Verpolschutz-Überwachung ist abschaltbar, um tiefentladene Batterien laden oder ein entsprechendes Gleichstromnetz, zum Beispiel das Bordnetz eines Kraftfahrzeuges, stützen zu können. In dieser Betriebsart werden polverkehrt angeschlossene Batterien als solche noch erkannt, wenn sie eine gewisse Mindest-Restspannung haben. Eine Ladung wird dann verhindert. Zusätzlich wird der Ladestrom zur Sicherheit auf einen kleinen Wert begrenzt.

Um eine Gefährdung der angeschlossenen Verbraucher, insbesondere der Bordelektronik eines Kraftfahrzeuges, durch statische oder transiente Überspannungen zu verhindern, wird mit geregelter und geglätteter Gleichspannung geladen.

Durch die in den abhängigen Ansprüchen aufgeführten Maßnahmen sind vorteilhafte Weiterbildungen und Verbesserungen des im unabhängigen Anspruch angegebenen Ladeverfahrens möglich. Die Begrenzung des Ladestromes in der zweiten Ladestufe erfolgt vorteilhafterweise auf einen Wert ≦ 1,5 A, vorzugweise ≦ 1 A, das heißt auf einen Stromwert, bei dem auch im Kurzschlußfall keine schädlichen Lichtbögen entstehen. Der eigentliche Ladevorgang der ersten Ladestufe erfolgt mit einem Konstantstrom, vorzugsweise in der Größenordnung von 30 A, bis die Gasungsspannung der Batterie erreicht ist. Danach wird die Spannung auf diesen Wert begrenzt und konstant gehalten, während der Ladestrom mit zunehmender Ladung in der Batterie abnimmt. Diese Ladecharakteristik wird als IU-Ladung bezeichnet, jedoch können selbstverständlich auch andere bekannte Ladecharakteristiken für die Batterie benutzt werden. Die Änderung der Ladecharakteristik ist in einfacher und vorteilhafter Weise möglich durch den Austausch von Steckmodulen der Schaltungsanordnung.

Weitere Vorteile und Verbesserungen des Anmeldungsgegenstandes ergeben sich aus den abhänigen Ansprüchen und aus der folgenden Beschreibung eines Ausführungsbeispieles.

### Zeichnung

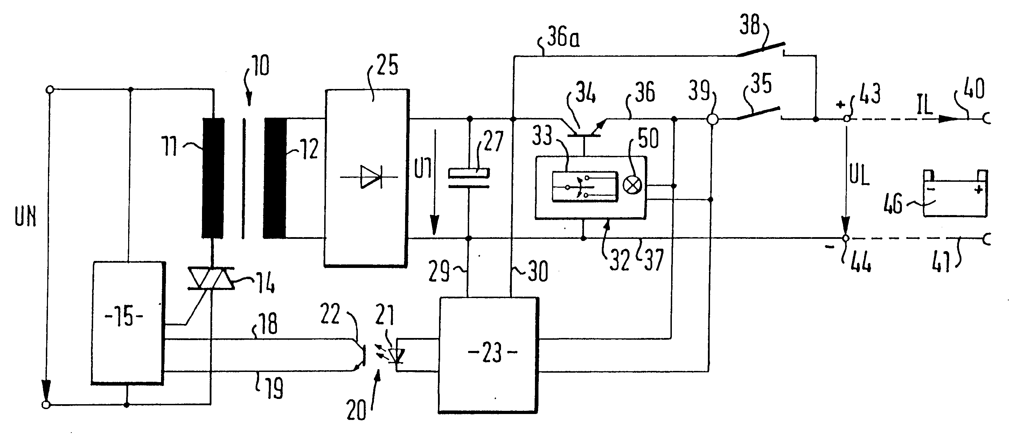

Ein Ausführungsbeispiel der Erfindung ist in der Zeichnung dargestellt und in der nachfolgenden Beschreibung näher erläutert.

### Beschreibung des Ausführungsbeispieles

In der Figur ist mit 10 ein Transformator bezeichnet, dessen Primärwicklung die Bezugsziffer 11 und dessen Sekundärwicklung die Bezugsziffer 12 tragen. In Reihe mit der Primärwicklung 11 liegt ein Triac 14, welcher von einem primärseitigen Steuergerät 15 im Phasenanschnitt gesteuert wird. Das Steuergerät 15 liegt parallel zu der Reihenschaltung aus Primärwicklung 11 und Triac 14 an der primärseitigen Netz-Wechselspannung U_{N}.

Die Steuereingänge des primärseitigen Steuergerätes 15 sind über Leitungen 18 und 19 mit einem Optokoppler 20 verbunden, welcher eine Lumineszenzdiode 21 und einen Fototransistor 22 enthält. Anode und Kathode der Lumineszenzdiode 21 sind mit dem Ausgang eines Verlustleistungs-Steuergerätes 23 verbunden, welches in Abhängigkeit von der Verlustleistung am sekundärseitigen Linearregler der Vorrichtung die primärseitig eingespeiste Leistung reduziert.

Die Sekundärseite 12 des Transformators 10 ist mit dem Eingang eines Brückengleichrichters 25 verbunden, an dessen Ausgang die gleichgerichtete Spannung U1 anliegt. Diese wird zusätzlich geglättet durch einen Glättungskondensator 27 parallel zum Ausgang des Brückengleichrichters 25. Weiterhin ist der Ausgang des Brückengleichrichters 25 über Leitungen 29 und 30 mit dem Verlustleistungs-Steuergerät 23 verbunden, an dessen Eingängen ferner die Ladespannung UL und der Ladestrom IL anliegen.

Die weitere Steuerung des Ladevorgangs erfolgt mittels einer Steuerelektronik 32, welche mit einer Ladestufen-Umschaltung 33 versehen ist, welche in einer ersten Ladestufe den normalen Ladevorgang einer Batterie und in einer zweiten Ladestufe einen Ladevorgang für eine tiefentladene Batterie, beziehungsweise einen Stützbetrieb für angeschlossene elektrische Verbraucher steuert. Die Steuerelektronik 32 ist mit dem Steuereingang eines Steuertransistors 34 verbunden, dessen Kollektor am positiven Ausgang des Brückengleichrichters 25 liegt und dessen Emitter mit einem Relaiskontakt 35 über eine Leitung 36 verbunden ist. Die zugehörige negative Leitung ist mit 37 bezeichnet. Von der Leitung 36 ist weiterhin die Ladespannung UL als erste Steuergröße und mittels eines Stromwandlers 39, der im einfachsten Fall als Shunt ausgebildet ist, der Ladestrom Il als zweite Steuergröße der Steuerelektrik 32 zugeführt.

Für den Betrieb der Ladevorrichtung als Starthilfevorrichtung sind der Steuertransistor 34 und der Relaiskontakt 35 über eine Leitung 36a und einen Schaltkontakt 38 überbrückbar.

Ladeleitungen 40 und 41 führen von der positiven Ausgangsklemme 43 und der negativen Ausgangsklemme 44 zu positiven und negativen Anschlußklemmen, welche entweder mit einer zu ladenden Batterie 46 oder mit einem im Stützbetrieb ohne angeschlossene Batterie 46 zu versorgenden Verbraucher verbindbar sind. Schließlich ist noch eine optische Verpolschutzanzeige 50 an der Steuerelektrik 32 vorgesehen, welche bei einem polverkehrten Anschluß der Ladevorrichtung aufleuchtet.

Die beschriebene Vorrichtung arbeitet wie folgt:

Nach dem Anlegen der Netz-Wechselspannung UN fließt über die Primärwicklung 11 des Transformators 10 ein Wechselstrom, dessen Mittelwert im Phasenanschnitt durch den Triac 14 und das primärseitige Steuergerät 15 in Abhängigkeit von der sekundärseitigen Verlustleistung am Steuertransistor 34 gesteuert wird. Auf der Sekundärseite des Transformators 10 liegt hinter dem Brückengleichrichter 25 eine mittels des Kondensators 27 geglättete Sekundär-Gleichspannung U1 als Versorgungsspannung des Ladekreises an. Die Höhe der Ladespannung UL und des Ladestroms IL werden bestimmt durch die Steuerelektronik 32, welcher ein Programm für eine bekannte Ladecharakteristik vorgegeben wird. Die Ladecharakteristik ist vom Anwender durch Tausch eines Moduls änderbar. Beim Ausführungsbeispiel wird nach einer IU-Kennline geladen, wobei die Ladung zunächst mit einem Konstantstrom von 30 A erfolgt bis zum Erreichen der Gasungsspannung der Batterie 46. Sobald die Ladespannung UL die Gasungsspannung der Batterie, also einen Wert von 14,4 Volt bei einer Bleibatterie mit sechs Zellen, erreicht hat, wird die Ladespannung UL an der Batterie konstant gehalten, der Ladestrom IL nimmt mit zunehmender Batterieladung allmählich ab.

Die Steuerelektronik 32 kann mittels der Ladestufen-Umschaltung 33 auf zwei verschiedene Ladestufen umgeschaltet werden. In der ersten, sogenannten Normal-Ladestufe kann eine Batterie 46, welche noch eine Restspannung im unbelasteten Zustand von mindestens 0,5 V aufweist, nach einem vorgegebenen Ladeprogramm geladen werden. Dieses Ladeprogramm ist in der Steuerelektronik 32 integriert und kann je nach gewünschten Ladevorgang ausgetauscht werden. Im vorliegenden Fall werden mittels des Stromwandlers 39 und eines Spannungsabgriffs am Ausgang des Steuertransistors 34 Ladestrom und Ladespannung gemessen und geregelt auf einen maximalen, konstanten Ladestrom von 30 A, welcher erst nach dem Erreichen der Gasungsspannung der Batterie, die nicht überschritten werden darf, allmählich abklingt. Gleichzeitig erfolgt mittels des Spannungsabgriffes am Emitter des Steuertransistors 34 auch eine Überwachung des polrichtigen Anschlusses der Batterie 46, beziehungsweise der Klemmen 43 und 44. Diese Überwachung des polrichtigen Anschlusses der Batterie ist möglich bis zu einer Restspannung derselben von mindestens 0,5 Volt, darunter ist die Verpolung nicht mehr feststellbar.

Eine zweite Ladestufe wird manuell mittels der Ladestufenumschaltung 33 aktiviert. Diese zweite Ladestufe dient entweder zum Laden einer tiefentladenen Batterie 46 oder zur Spannungsversorgung von an die Batterie anschließbaren Verbrauchern 48, wobei der Ladestrom IL in der zweiten Ladestufe auf einen niedrigen Wert, hier auf einen Wert < 1,5 A begrenzt wird. Der Verpolschutz ist in der zweiten Ladestufe unterhalb der vorgegebenen Mindest-Restspannung von 0,5 V außer Betrieb, schützt jedoch dennoch falsch gepolte Batterien, soweit die von der Batterie eingespeiste Spannung - 0,5 V unterschreitet.

Erfindungsgemäß wird also für den Kraftfahrzeug-Service ein Ladeverfahren vorgeschlagen, das wenigstens zwei Ladestufen aufweist. In einer ersten Ladestufe für "Normalladung" können alle entladenen oder teilentladenen Batterien wieder aufgeladen werden, die im unbelasteten Zustand noch ein Spannungspotential von mindestens 0,5 Volt aufweisen. Nach polrichtigem Anschluß der Ladeleitungen 40, 41, beziehungsweise der zugehörigen Ladezangen, erfolgt die Ladung entsprechend der vorgesehenen Kennlinie. Bei polfalschem Anklemmen der Batterie 46 erkennt die in der Steuerelektronik 32 integrierte Polschutz-Elektronik den Fehler, verhindert das Einschalten der Vorrichtung und zeigt den Verpolungsfehler mittels der optischen Verpolschutz-Anzeige 50 an. Löst sich während des Ladevorgangs eine Klemme von der zu ladenden Batterie, so schaltet die Ladevorrichtung den Ausgang spannungslos.

Die zweite, mittels der Umschaltvorrichtung 33 aktivierbare Ladestufe dient dem Laden tiefentladener Batterien oder dem Stützbetrieb für angeschlossene Verbraucher 48. In dieser Schaltstellung ist die Polschutzeinrichtung ab einer polfalschen Gegenspannung von mindestens 0,5 Volt weiterhin wirksam, es ist jedoch zur Aktivierung des Ausgangs keine positive Gegenspannung erforderlich. In dieser zweiten Ladestufe fließt im gesamten Bereich der Ladespannung von 0 bis 16 Volt nur ein konstanter Ladestrom von 1,5 Ampere, welcher bei störanfälligen Verbrauchern 48 auch beispielsweise auf 1 Ampere reduziert werden kann.

Die Anfangsladung tiefentladener Batterien 46 ist durch die Strombegrenzung in der zweiten Ladestufen schonend möglich. Nach Polarisierung der Batterie 46 und Erreichen einer stabilen Gegenspannung ist die Rückschaltung auf Normalbetrieb, das heißt auf die erste Ladestufe möglich.

In der zweiten Ladestufe kann nach vorherigem polrichtigem Anschluß an einen Verbraucher 48, insbesondere zum Beispiel an ein Kraftfahrzeug-Bordnetz, die Versorgung verschiedener Kleinverbraucher erfolgen, während die Batterie zwischenzeitlich abgeklemmt oder ganz entfernt werden kann. Dieser sogenannte Stützbetrieb ist wesentlich, da ein Teil der im Kraftfahrzeug eingesetzten Elektronik ständig am Bordnetz verbleibt. Hierzu zählen beispielsweise Eigenkontrolle, stabilisierte Betriebszustände, Timer und flüchtige Speicher.

Andererseits kommt es durch diese dauernd angeschlossenen Verbraucher bei längerer Ruhezeit des Kraftfahrzeuges auch zur Tiefentladung der Batterie 46. In dieser Situation ist die Erkennung der Polarität durch Spannungsmessung problematisch, da die Batterie unter Umständen nur noch ein minimales Spannungspotential aufweist. Durch die erfindungsgemäße zweite Ladestufe kann nun einerseits eine tiefentladene Batterie für das Längsregelglied verlustarm wieder aufgeladen werden und andererseits erhält man mit der erfindungsgemäßen Vorrichtung eine Ersatzstromquelle mit begrenzter Leistung, wodurch sich eine Unterbrechung in der Bordnetzversorgung, beispielsweise bei Reparaturen und Installationsarbeiten am Bordnetz, überbrücken läßt.

Die Einspeisung im Stützbetrieb der zweiten Ladestufe kann entweder über die Ladeklemmen an den Ladeleitungen 40, 41 oder alternativ über eine separate Leitung mit Stecker an der Bordsteckdose eines Kraftfahrzeuges erfolgen, so daß der Zugang zur Batterie 46 nicht behindert ist. Aufgrund der Leistungsbegrenzungs-Regelung ist auch die Gefahr von Folgeschäden durch Funken oder Kurzschlüsse während Reparatur-Arbeiten gering.

Voraussetzung für die problemlose Versorgung elektrischer, insbesondere elektronischer Verbraucher ist eine entsprechend geglättete Gleichspannung UL, die statisch und transient innerhalb enger Toleranzen liegt. Dies wird bei der erfindungsgemäßen Vorrichtung erreicht durch den verwendeten Linearregler mit dem Steuertransistor 34. Als Regelgröße für die Vorregelung dient die Verlustleistung oder der Spannungsabfall am Linearglied.

Um eine Unterbrechung in der Batterie 46 oder den Zuleitungen 40, 41 zu erkennen, wird die Ladespannung UL zyklisch für eine kurze Zeit ausgestastet und in dieser Zeit die außenliegende Spannung gemessen. Liegt außen keine Spannung an, so könnte die Ladezange von der Batterie 46 abgefallen sein. Um einer Funkenbildung entgegenzuwirken, wird die Ladespannung UL nicht mehr auf die Ladeleitung geschaltet. Um dabei das Schaltelement zu entlasten, erfolgt die Tastung nur unterhalb eines vorgegebenen Grenzstroms.

## Patentansprüche

1. Verfahren zum Laden einer Bleibatterie, bei dem die Ladespannung (UL) und/oder der Ladestrom (IL) überwacht und begrenzt werden, mit wenigstens zwei Ladestufen, von denen die erste Ladestufe zur Ladung einer Batterie mit einer Mindest-Restspannung im unbelasteten Zustand von wenigstens 0,5 Volt nach einer vorgegebenen Ladekennlinie bei gleichzeitiger Überwachung des polrichtigen Anschlusses der Batterie und die zweite Ladestufe für das Laden einer tiefentladenen Batterie (46) dient, dadurch gekennzeichnet, daß die zweite Ladestufe zur Spannungsversorgung von an die Batterie anschließbaren Verbrauchern (48) nutzbar ist, indem in der zweiten Ladestufe der Ladestrom (IL) auf einen niedrigen Wert begrenzt und die Überwachunng des polrichtigen Anschlusses der Batterie (46) unterhalb der vorgegebenen Mindest-Restspannung außer Betrieb gesetzt wird.

2. Verfahren nach Anspruch 1, dadurch gekennzeichnet, daß der Ladestrom (IL) in der zweiten Ladestufe auf einen Wert < 1,5 Ampere begrenzt ist.

3. Verfahren nach Anspruch 1 oder 2, dadurch gekennzeichnet, daß die Ladung in der ersten Ladestufe mit einem Konstantstrom erfolgt bis zum Erreichen der Gasungsspannung der Bleibatterie (46), und daß danach die Spannung (UL) an der Batterie bei abnehmendem Ladestrom (IL) konstant auf diesem Wert gehalten wird (IU-Ladung).

4. Verfahren nach einem der vorhergehenden Ansprüche, dadurch gekennzeichnet, daß eine Verpolung beim Anschluß der Batterie (46) optisch angezeigt wird.

5. Verfahren nach einem der vorhergehenden Ansprüche, dadurch gekennzeichnet, daß die Ladespannung (UL) bei Verpolung der Batterie (46) automatisch abgeschaltet wird.

6. Verfahren nach einem der vorhergehenden Ansprüche, gekennzeichnet durch eine bei einer Unterbrechung im Ladekreis (40, 41), insbesondere beim Lösen einer Anschlußklemme der Batterie (46), automatisch wirksame Abschaltung, welche den Ausgang (UL, IL) der Ladevorrichtung spannungslos schaltet.

7. Verfahren nach Anspruch 6, dadurch gekennzeichnet, daß zur Erkennung einer Unterbrechung im Ladekreis (40, 41) der Ladevorgang zyklisch für eine kurze Zeit unterbrochen und währenddessen die außenliegende Spannung gemessen wird.

8. Verfahren nach einem der vorhergehenden Ansprüche, dadurch gekennzeichnet, daß die Ladekennlinien und/oder die Parameter von Ladespannung (UL) und Ladestrom (IL) mittels Austausch von Steckmodulden veränderbar sind.

## Claims

1. Method for charging a lead-acid battery, in the case of which method the charge voltage (UL) and/or the charging current (IL) are monitored and limited, having at least two charging stages of which the first charging stage is used to charge a battery with a minimum residual voltage in the unloaded state of at least 0.5 volts in accordance with a predetermined charging characteristic whilst simultaneously monitoring that the battery has been connected in the correct polarity, and the second charging stage is used for charging of a deep-discharged battery (46), characterized in that the second charging stage can be used for supplying voltage to loads (48) which can be connected to the battery, in that, in the second charging stage, the charging current (IL) is limited to a low value and the monitoring that the battery (46) has been connected in the correct polarity is rendered inoperative below a predetermined minimum residual voltage.

2. Method according to Claim 1, characterized in that the charging current (IL) in the second charging stage is limited to a value of < 1.5 amperes.

3. Method according to Claim 1 or 2, characterized in that the charging in the first charging stage is carried out at a constant current until the gassing voltage of the lead-acid battery (46) is reached, and in that, thereafter, the voltage (UL) on the battery is kept constant at this value while the charging current (IL) reduces (IU charging).

4. Method according to one of the preceding claims, characterized in that incorrect polarity when the battery (46) is connected is indicated visually.

5. Method according to one of the preceding claims, characterized in that the charge voltage (UL) is automatically turned off if the battery (46) polarity is incorrect.

6. Method according to one of the preceding claims, characterized by turning off which acts automatically in the event of an interruption in the charging circuit (40, 41), especially in the event of a connecting terminal in the battery (46) becoming loose, and switches the output (UL, IL) of the charging device so that there is no voltage on it.

7. Method according to Claim 6, characterized in that the charging process is cyclically interrupted for a short time in order to identify an interruption in the charging circuit (40, 41), and the external voltage is measured during this time.

8. Method according to one of the preceding claims, characterized in that the charging characteristics and/or the parameters of the charge voltage (UL) and charging current (IL) can be varied by replacement of plug-in modules.

## Revendications

1. Procédé pour charger une batterie au plomb, dans le cas duquel on contrôle et on limite la tension de charge (UL) et/ou l'intensité de charge (IL), avec au moins deux étages de charge parmi lesquels le premier étage de charge sert à charger une batterie qui présente une tension résiduelle minimale d'au moins 0,5 V à l'état déchargé, selon une courbe caractéristique de charge prédéfinie avec contrôle simultané du raccordement correct à la batterie quant aux polarités, et le deuxième étage de charge sert à charger une batterie profondément déchargée (46), procédé caractérisé en ce que le deuxième étage de charge peut être utilisé pour alimenter en tension des appareils consommateurs d'électricité pouvant être raccordés à la batterie, tandis que, dans le deuxième étage de charge l'intensité de charge (IL) est limitée à une valeur plus basse et la surveillance du raccordement correct de la batterie (46) quant aux polarités, est mise hors de fonctionnement en dessous de la tension résiduelle minimale prédéfinie.

2. Procédé selon la revendication 1, caractérisé en ce que le courant de charge (IL) est limité, dans le deuxième étage de charge, à une valeur inférieure à 1,5 Ampère.

3. Procédé selon la revendication 1 ou 2, caractérisé en ce que la charge, dans le premier étage de charge, a lieu avec une intensité constante jusqu'à ce que soit atteinte la tension de début de dégagement gazeux de la batterie au plomb (46), et en ce qu'ensuite la tension (UL) est maintenue constante à cette valeur (charge IU) sur la batterie alors que l'intensité de charge (IL) décroît.

4. Procédé selon l'une des revendications précédentes, caractérisé en ce que l'on indique de façon optique une inversion de polarité lors du raccordement de la batterie (46).

5. Procédé selon l'une des revendications précédentes, caractérisé en ce que la tension de charge (UL), en cas d'inversion des polarités de la batterie, est automatiquement débranchée.

6. Procédé selon l'une des revendications précédentes, caractérisé par un débranchement s'opérant automatiquement dans le cas d'une coupure du circuit de charge (40, 41), en particulier si une pince de raccordement se détache de la batterie (46), débranchement qui met hors tension la sortie (UL, IL) du dispositif de charge.

7. Procédé selon la revendication 6, caractérisé en ce que, pour détecter une coupure dans le circuit de charge (40, 41), on interrompt cycliquement le processus de charge pendant un court laps de temps et, pendant celui-ci, on mesure la tension existant à l'extérieur.

8. Procédé selon l'une des revendications précédentes, caractérisé en ce que les courbes caractéristiques de charge et/ou les paramètres de la tension de charge (UL) et de l'intensité de charge (IL) peuvent être modifiées par changement de modules enfichables.
